# FASCICULE DE BREVET EUROPEEN

(11) **EP 2 206 647 B1**
(45) Date de publication et mention de la délivrance du brevet: **06.04.2016**
(21) Numéro de dépôt: 10150171.6
(22) Date de dépôt: 06.01.2010
(51) Int. Cl.: B64D 41/00

(54) **Système de commandes de vol pour un avion**
Steuersystem für einen Flugzeug
Aircraft flight control system

(30) Priorité: 08.01.2009 FR 0950080
(43) Date de publication de la demande: 14.07.2010
(73) Titulaire: Airbus Operations (Société par actions simplifiée), 31060 Toulouse (FR)
(72) Inventeur: Fervel, Marc, 31300 Toulouse (FR); Lando, Jean-Louis, 09700 Saverdun (FR); Gentilhomme, Alexandre, 31200 Toulouse (FR)
(74) Mandataire: Ilgart, Jean-Christophe

(56) Documents cités:
- WO-A1-2008/046701
- WO-A2-2004/037641
- FR-A- 2 911 847
- US-A- 4 447 737
- US-A1- 2005 082 427
- US-A1- 2006 012 177
- US-A1- 2006 061 213
- FALEIRO LESTER: "Beyond the more electric aircraft" AEROSPACE AMERICA, vol. 47, no. 6, 1 juin 2005 (2005-06-01), pages 35-40, XP002541982 Reston USA
- Wheeler P.W.: "An electro-hydrostatic aircraft actuator using a matrix converter permanent magnet motor drive" Power Electronics, Machines and Drives, 2004. (PEMD 2004). Second International Conference on (Conf. Publ. No. 498) vol. 2, no. 498, 2 avril 2004 (2004-04-02), 2 avril 2004 (2004-04-02), pages 464-468, XP002572125 Edinburg UK Extrait de l'Internet: URL:http://ieeexplore.ieee.org/stamp/stamp .jsp?arnumber=01350066> [extrait le 2010-03-08]
- WARWICK G: "LOCKHEED MARTIN TO FLY ALL-ELECTRIC F-16" FLIGHT INTERNATIONAL, REED BUSINESS INFORMATION, SUTTON SURREY, GB, vol. 151, no. 4578, 11 juin 1997 (1997-06-11), page 28, XP000692734 ISSN: 0015-3710

## Description

Le sujet de l'invention présente est un système de commandes de vol pour un avion.

Les systèmes de commandes de vol comprennent les moyens nécessaires au déplacement de certains organes mobiles des avions, comme les organes de direction et le train d'atterrissage, parmi d'autres. Ils se composent d'une pluralité de circuits afin d'assurer la division et la redondance nécessaires à la sécurité. Chaque circuit comprend en particulier au moins un dispositif de prise d'énergie adjacent aux moteurs, des actionneurs adjacents aux organes commandés et des dispositifs intermédiaires de transport et de conversion de l'énergie. On trouve trois circuits hydrauliques, c'est-à-dire pourvus d'actionneurs hydrauliques, ou deux circuits hydrauliques et au moins deux circuits électriques, alimentant des actionneurs électriques, dans les systèmes de commandes de vol employés aujourd'hui sur les avions de ligne.

Les actionneurs hydrauliques sont alimentés par des pompes hydro-mécaniques (EDP) directement connectées à une boîte d'accessoires disposée sur chacun des moteurs et comprenant un engrenage réducteur. Ils peuvent aussi être alimentés par des pompes électro-hydrauliques (EMP) qui sont alors séparées des moteurs par des dispositifs de fourniture d'énergie électrique qui peuvent être de deux catégories : des générateurs pilotés intégrés (IDG) fournissant une tension alternative triphasée à fréquence fixe et valeur efficace constante, ou des dispositifs à électronique de puissance convertissant une tension continue en la tension alternative nécessaire à la commande des moteurs électriques des pompes.

Dans le cas des circuits électriques, les actionneurs sont commandés soit par les générateurs IDG d'une tension fréquence fixe et valeur efficace constante, soit par des générateurs VFG d'une tension alternative triphasée à fréquence variable et valeur efficace constante. Les générateurs IDG ont l'avantage de ne pas toujours requérir d'électronique de puissance sur les actionneurs qu'ils commandent puisqu'ils fournissent un courant de caractéristiques constantes, mais ils présentent les inconvénients d'être coûteux et d'une fiabilité moins bonne, alors que les générateurs VFG nécessitent toujours l'emploi d'une électronique de puissance sur les actionneurs pour piloter leurs moteurs électriques à une vitesse de rotation convenable, donnant un couple suffisant pour réaliser l'actionnement des organes commandés. En pratique, les pompes électro-hydrauliques commandées par des générateurs IDG sont utilisées en redondance avec des pompes hydro-mécaniques dans les systèmes existant pour des raisons de sécurité, et l'utilisation de générateurs VFG ne s'est pas généralisée puisque les pompes électro-hydrauliques, qui restent préférées pour commander certains organes en raison de la plus grande fiabilité des actionneurs hydrauliques, sont commandées plus facilement, sans électronique de puissance, par les générateurs IDG.

Les systèmes de commande de vol existants présentent certains inconvénients. C'est ainsi que les systèmes hydrauliques obligent à installer des tuyauteries en réalisant des alignements précis, et séparés des autres équipements. Ils sont donc compliqués, pesants et coûteux, et ils demandent aussi des opérations de vérification et d'entretien fastidieuses. Les échauffements sont particulièrement nuisibles sur le fluide hydraulique, qui est susceptible alors de s'acidifier, entraînant ainsi des risques d'endommagements des systèmes. Des remplacements plus fréquents du fluide deviennent nécessaires. Mais les systèmes électriques présentent aussi des inconvénients puisqu'ils produisent des échauffements importants qu'il n'est pas toujours possible de faire dissiper dans l'air environnant ou par les structures environnantes de l'avion, notamment à l'endroit des moteurs électriques. Les électroniques de puissance de ces moteurs, obligatoires avec plupart des générateurs d'électricité, accroissent le volume des actionneurs et compliquent leur intégration. Les électroniques de puissance sont elles-mêmes dissipatrices d'une énergie importante et sujettes à des cycles thermiques susceptibles d'engendrer des dilatations et contraintes mécaniques de fatigue sur les éléments électroniques. Ces difficultés sont ainsi accrues sur des structures et des voilures plus fines et en carbone, matériau présentant des capacités de dissipation thermique réduites. Et les actionneurs électro-mécaniques sont d'une fiabilité moindre à cause de l'obligation de convertir les mouvements de rotation des moteurs électriques en mouvements de translation de l'élément actif, typiquement une tige de vérin, avec une transmission intermédiaire et des risques de grippage plus grands.

Les inconvénients de lourdeur ou de complexité des systèmes existants sont d'autant plus présents que les circuits doivent être dédoublés à des fins de redondance pour se prémunir contre les pannes d'un moteur ou les défaillances individuelles de circuits.

Si aucun système n'est dépourvu d'inconvénients, des progrès pouvaient être apportés en réduisant l'importance des tuyauteries hydrauliques à bord de l'avion ainsi que les risques de dégradation du fluide hydraulique sous l'effet des échauffements.

L'état de l'art comprend des systèmes de commande de vol, au moins à l'état de projet, exclusivement électriques ou presque, afin d'éliminer ces inconvénients (voir, par exemple, "Beyond the more electric aircraft", AEROSPACE AMERICA,vol. 47, no. 6, 1 Juin 2005, pages 35-40).

L'invention concerne un tel système de commande de vol, selon la revendication 1, où les éléments hydrauliques en zones moteurs sont supprimés, et tous les dispositifs de prise d'énergie des moteurs de l'avion restituent une énergie électrique aux circuits.

Tous les circuits du système de commandes de vol sont donc électriques en amont, mais sans qu'ils le soient nécessairement en entier en raison des inconvénients inhérents aux actionneurs électriques, et notamment une fiabilité moins grande. C'est pourquoi certains au moins des circuits finissent sur des actionneurs hydrauliques et comportent un moyen de conversion intermédiaire d'énergie électrique en énergie hydraulique.

Les moyens de prise d'énergie sont de deux catégories différentes, afin de supprimer l'exposition aux pannes génériques frappant une catégorie particulière de ces moyens : les moyens de l'autre catégorie restent opérationnels et permettent de continuer d'assurer les fonctions essentielles, dont le contrôle du pilotage de l'avion sur tous ses axes, à condition d'avoir réparti judicieusement la commande des organes entre les différents circuits.

Les moyens de prise d'énergie comprennent des générateurs délivrant un courant au rapport tension sur fréquence constant à fréquence variable et tension variable. Ces générateurs ont l'avantage qu'ils sont, d'après l'invention, reliés à des pompes électro-hydrauliques sans interposer de l'électronique de puissance, l'arbre d'entrée des pompes étant commandé à une vitesse de rotation qui varie proportionnellement au régime des moteurs de l'avion. C'est notamment vrai si ces pompes électro-hydrauliques sont du type à aimant permanent. Les générateurs sont eux-mêmes du type à aimant permanent.

L'art antérieur ne divulgue ni ne suggère de commande de pompe électro-hydraulique par de tels générateurs à rapport de tension sur fréquence constant de façon directe ou presque, sans électronique de puissance qui modifierait la caractéristique du courant délivré par ces générateurs.

Les autres moyens de prise d'énergie peuvent être choisis parmi les générateurs électriques à fréquence variable et niveau de tension fixe, et les générateurs électriques à fréquence fixe et niveau de tension fixe.

Un autre grand aspect de l'invention est relatif à une attribution judicieuse de certains des organes commandés à certains des circuits. C'est ainsi qu'il est avantageux de piloter un train d'atterrissage principal de l'avion par un actionneur hydraulique, jugé plus fiable. Un circuit à la fois électrique et hydraulique, pourvu alors d'une pompe électro-hydraulique, dessert alors avantageusement ce train d'atterrissage principal et son actionneur ; d'autres circuits, voire tous les autres circuits, peuvent alors être entièrement électriques jusqu'aux actionneurs afin de bénéficier de la légèreté et de la facilité d'aménagement plus grande des circuits purement électriques. Comme leur fiabilité est moins grande, une conception particulièrement avantageuse consiste alors à faire desservir aussi par le circuit électrique et mécanique des organes permettant le contrôle du pilotage de l'avion sur tous ses axes, afin de suppléer aux circuits entièrement électriques soit en cas d'avarie, soit pour les soulager en limitant leur échauffement.

Un circuit particulièrement fiable comprend une bifurcation vers deux des moyens de prise d'énergie, reliés à deux des moteurs, qui sont différents. Chacun des moyens de prise d'énergie peut contribuer seul à l'alimentation en énergie du circuit, au moins dans des circonstances normales, ce qui réduit le risque de pannes. Conformément à des considérations déjà faites, un tel circuit dessert avantageusement le train d'atterrissage principal de l'avion au moyen de pompes électro-hydrauliques commandant des actionneurs hydrauliques.

Selon un autre aspect principal de l'invention, certains des circuits, entièrement électriques jusqu'aux actionneurs, sont pourvus d'une unité de redressement de courant électrique entre les moyens de prise d'énergie et les actionneurs, qui peuvent alors être pilotés par une électronique de puissance simplifiée.

Selon encore un autre aspect principal de l'invention, des connexions électriques sont établies entre les circuits, ce qui permet de commuter de la puissance électrique d'un des circuits. Cette disposition peut concerner des circuits semblables, c'est-à-dire pourvus essentiellement des mêmes équipements et qui commandent seulement des organes différents. Elle peut aussi concerner, selon une caractéristique plus particulière, des connexions entre des générateurs à fréquence variable de certains des circuits et des pompes hydro-électriques d'autres des circuits, afin de commander les pompes par des générateurs à fréquence variable, sans électronique de puissance, dans certaines circonstances, notamment en temps de décollage, quand les générateurs à fréquence variable fournissent un courant directement utilisable par ces pompes.

L'invention concerne encore un avion pourvu de tel système de commande de vol.

L'invention sera maintenant décrite plus en détail en liaison aux figures suivantes, dont :
- les figures 1 et 2 illustrent deux réalisations de l'art connu,
- et les figures 3, 4, et 5, trois réalisations possibles de l'invention.

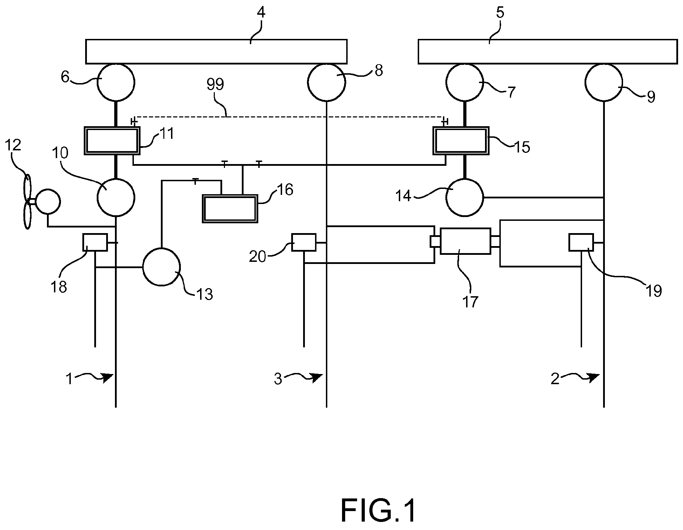

Le dispositif déjà connu de la figure 1 (utilisé sur l'Airbus A 320) comprend trois circuits 1, 2 et 3 alimentés par deux moteurs 4 et 5 indépendants de l'avion. De la puissance est prélevée de chacun des moteurs 4 et 5 par un générateur 6 ou 7 piloté intégré (générateur IDG) et par une pompe hydro-mécanique 8 ou 9. Le générateur 6 connecté au premier moteur 4 alimente une pompe électro-mécanique 10 qui assure la mise sous pression du fluide du premier circuit 1, par l'intermédiaire d'un élément 11 électrique délivrant un courant de fréquence constante. Une éolienne 12 (ram air turbine ou RAT) sert à alimenter un moteur-alternateur 13 de secours. L'autre générateur 7 sert à fournir de l'énergie à une autre pompe électro-hydraulique auxiliaire 14 qui met le fluide du deuxième circuit 2 sous pression dans certaines conditions lorsque la pompe hydro-mécanique 9 connectée au même moteur (le second moteur 5) ne fonctionne pas. Un élément 15 analogue à l'élément 11 est utilisé. Les éléments 11 et 15 sont reliés par une connexion électrique 99 de manière à transférer à volonté la puissance électrique de l'un à l'autre quand les circonstances l'exigent. Ils peuvent assurer l'alimentation d'un autre élément 16 pouvant également être alimenté dans certaines conditions par le générateur 13 entraîné par le débit du fluide hydraulique du circuit 1. Enfin, la pompe hydro-mécanique 8 entraînée par le premier moteur 4 met le fluide du troisième circuit 3 sous pression. La puissance des pompes hydro-mécaniques 8 et 9 peut être commutée vers l'un ou l'autre des deuxième et troisième circuits 2 et 3 par une unité de transfert de puissance 17. Chacun des circuits 1, 2 et 3 est pourvu d'une vanne de priorité 18, 19 et 20 pour transférer en cas de besoin l'énergie hydraulique vers une branche de secours du circuit.

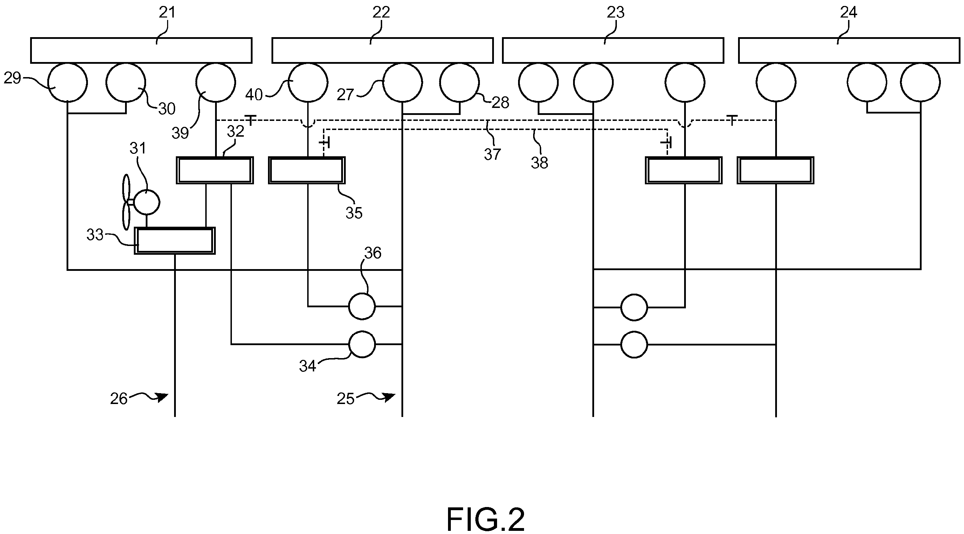

Un autre exemple de réalisation connu (employé dans l'Airbus A 380) sera brièvement décrit puisqu'il illustre l'emploi de circuits électriques. Il apparaît à la figure 2. L'avion comprend quatre moteurs 21, 22, 23 et 24. La description portera seulement sur la moitié du système, dépendant par exemple des deux premiers moteurs 21 et 22, puisque l'autre est exactement semblable. Les moteurs 21 et 22 alimentent un premier circuit (circuit hydraulique 25) et un circuit électrique 26. Chacun d'eux entraîne une paire de pompes hydro-mécaniques 27 et 28, ou 29 et 30 qui mettent toutes sous pression le fluide du circuit hydraulique 25. Chacun des moteurs 21 et 22 entraîne aussi un générateur à fréquence variable (VFG) 39 ou 40. Le premier générateur 39 alimente le circuit électrique 26, concurremment à une éolienne 31 par l'intermédiaire d'éléments 32 et 33 électriques délivrant une fréquence variable. Toutefois, le générateur 39 peut aussi contribuer à la mise sous pression du fluide du circuit hydraulique 25 en commandant une pompe électro-hydraulique 34. L'autre générateur 40 à fréquence variable sert à la même fonction de mise sous pression par l'intermédiaire d'un élément 35 électrique délivrant une fréquence variable et d'une autre pompe électro-hydraulique 36. Les pompes électro-hydrauliques 34 et 36 sont utilisées seulement au sol. Quoique les circuits dépendant des autres moteurs 23 et 24 soient indépendants, des connexions électriques 37 et 38 existent entre les générateurs à fréquence variable associés aux deux circuits électriques et entre les deux autres générateurs, toujours afin d'effectuer des transferts de puissance à fréquence variable en cas de besoin.

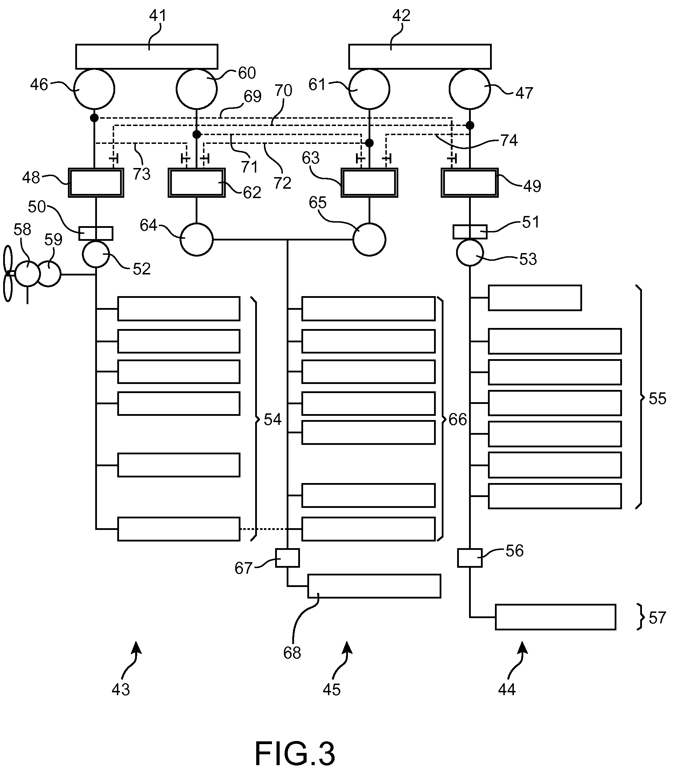

La description porte maintenant sur une première réalisation de l'invention au moyen de la figure 3. Elle a été conçue pour un avion à deux moteurs 41 et 42 et comprend trois circuits 43, 44, et 45, tous électro-hydrauliques. Chacun des moteurs 41 et 42 alimente un générateur à fréquence variable 46 et 47 puis, par l'intermédiaire d'un élément 48 ou 49 électrique délivrant un courant à fréquence variable et d'une électronique de puissance 50 ou 51, une pompe électro-hydraulique 52 ou 53 qui met respectivement sous pression le fluide du premier circuit 43 et celui du deuxième circuit 44. Toutefois, le premier circuit 43 est muni d'une éolienne 58 équipée d'un ensemble pompe et générateur 59 qui fournit les alimentations de secours.

Le premier circuit 43 est utilisé pour la commande d'actionneurs et d'organes 54 associés, ici la commande des ailerons extérieurs gauche et droit, des spoilers (brise-air) 1 et 3 gauche et droit, de la gouverne de direction, des élévateurs gauche et droit, des becs et des freins de becs, et du second système de freins. Le deuxième circuit 44 est destiné à la commande d'autres actionneurs et organes 55, ici des portes, des spoilers 2 et 4 gauche et droit, de la gouverne de direction, de l'élévateur droit, de l'actionneur THSA (réglant le plan horizontal de l'avion), des becs et des freins de becs, des volets, du différentiel et des freins de volets, et, par l'intermédiaire d'une vanne de priorité 56, de l'orientation des roues avant et de la manoeuvre du train avant (organe 57).

Les moteurs 41 et 42 alimentent aussi des générateurs à aimant permanent, respectivement 60 et 61, qui commandent des pompes électro-hydrauliques 64 et 65 par l'intermédiaire d'éléments 62 et 63 électriques, délivrant un courant à rapport de fréquence et tension constant, mais sans électronique de puissance. Les pompes électro-hydrauliques 64 à 65 assurent la mise sous pression du fluide du troisième circuit 45 et commandent des actionneurs et des organes 66 tels que les ailerons gauche et droit, les spoilers 5 gauche et droit, la gouverne de direction, l'élévateur gauche, le THSA de réglage du plan horizontal, les volets et les freins de volets, le premier système de frein, et, par l'intermédiaire d'une vanne de priorité 67, le train d'atterrissage principal (organe 68).

Ce troisième circuit 45 est le plus important puisqu'il permet la rentrée du train d'atterrissage principal, le contrôle du pilotage de l'avion sur tous ses axes, le contrôle du freinage et l'orientation des roues. Une seule des pompes électro-hydrauliques 64 et 65 est normalement active, l'autre étant au repos et utilisée seulement en cas de besoin. Aucune électronique de puissance n'est nécessaire avec les générateurs à aimant permanent 60 et 61 qui assurent un rapport tension sur fréquence constant combinés aux pompes électro-hydrauliques 64 et 65, aussi à aimant permanent. Cela serait encore vrai avec un générateur de type IDG (à fréquence fixe et valeur efficace constante), quoique ces générateurs ne soient pas préférés pour des raisons de fiabilité et de coût ; mais une électronique de puissance serait nécessaire avec des générateurs à tension constante et fréquence variable et des générateurs de courant continu. Il ressort que les générateurs à aimant permanent 60 et 61, fournissant une fréquence proportionnelle à la vitesse de rotation du moteur 41 ou 42 de l'avion, permettent un agencement simple et sont bien adaptées à la commande en vol.

Les premier et deuxième circuits 43 et 44 servent aussi à assurer le contrôle du pilotage de l'avion sur tous ses axes, le freinage, les fonctions du train d'atterrissage avant et la commande des portes. Le choix de générateurs à fréquence variable 46 à 47 rend nécessaire l'emploi des électroniques de puissance 50 et 51. L'éolienne 58 est utilisée en dernier recours pour maintenir le contrôle du pilotage de l'avion.

Il convient de détailler certains avantages de ce mode de réalisation de l'invention. Deux types différents de générateurs électriques (à aimant permanent et à fréquence variable) sont employés, ce qui réduit la vulnérabilité du système aux pannes génériques d'une catégorie de générateurs et assure donc le maintien des fonctions essentielles de pilotage dans ce cas.

De façon caractéristique de l'invention, la combinaison des générateurs à aimant permanent et de pompes électro-hydrauliques sur un même circuit 45 permet de construire celui-ci de façon simplifiée grâce à la faculté de se passer d'électronique de puissance, les pompes électro-hydrauliques étant commandées à une vitesse de rotation de l'arbre d'entrée qui varie proportionnellement au régime des moteurs 41 ou 42. De plus, la conception simple des générateurs à aimant permanent leur donne une bonne fiabilité, qui retentit sur tout le circuit qu'ils commandent.

Ainsi qu'on l'a mentionné, l'emploi de circuits hydrauliques à proximité de pompes hydro-mécaniques adjacentes au moteur est désavantageux à cause des contraintes d'installation en zone moteur, de la plus grande longueur de leurs circuits hydrauliques et des risques de dégradation du fluide par les échauffements du moteur. L'utilisation exclusive de générateurs électriques permet de réduire la longueur hydraulique des circuits, qui commence seulement aux pompes 52, 53 ou 64, 65. Ces pompes peuvent être placées librement dans l'avion, éloignées des moteurs, rapprochées des actionneurs ou aussi être placées près des réservoirs du fluide afin de réduire plus fortement la longueur des circuits, et être situées dans des lieux où leur entretien est plus facile et où elles sont protégées de dommages en cas d'éclatement d'un moteur.

L'utilisation conjointe de deux générateurs d'énergie (60 et 61) et de deux pompes (64 et 65) pour le troisième circuit 45, qui dessert les éléments les plus essentiels comme le train principal d'atterrissage, permet d'obtenir une fiabilité plus grande, une seule des sources d'énergie et une seule des pompes étant normalement utilisée ; les conduits originaires des pompes se rejoignant vite, cette conception n'impose pas un alourdissement important. Chaque couple composé d'un des générateurs à aimant permanent et d'une des pompes électro-hydrauliques 60, 64, 61 et 65 est dimensionné pour couvrir les besoins ordinaires de consommation sur le troisième circuit 45. Les couples d'un générateur et d'une pompe peuvent alors être utilisés alternativement de façon à augmenter leur durée d'utilisation. On peut les utiliser simultanément en cas de besoin.

Le système se prête à des reconfigurations nombreuses en cas de panne d'un des moteurs 41 ou 42 ou dans des circonstances particulières. Des connexions électriques 69, 70 unissent le premier circuit 43 en aval du générateur 46 et l'élément 49 électrique du deuxième circuit 44, et réciproquement, de manière que le premier circuit 43 et le deuxième circuit 44 peuvent être alimentés indifféremment par l'un ou l'autre des générateurs à fréquence variable 46 et 47. D'autres connexions électriques 71 et 72 relient le générateur à aimant permanent 60 associé au premier moteur 41 à l'élément 63 électrique en aval de l'autre générateur à aimant permanent 61, et réciproquement, pour alimenter chacune des pompes électro-hydrauliques 64 et 65 indifféremment par l'un ou l'autre des générateurs à aimant permanent 60 et 61. Une autre possibilité encore serait de disposer des connexions électriques 73 et 74 entre les générateurs à fréquence variable 46 et 47 et les éléments 62 et 63 de commande des pompes électro-hydrauliques 64 et 65 afin que celles-ci soient alimentées par les générateurs à fréquence variable 46 et 47 dans certaines situations, comme au décollage, où le régime élevé des moteurs 41 et 42 permet de commander ces pompes électro-hydrauliques 64 et 65 dans de bonnes conditions par des générateurs à fréquence variable 46 à 47, qui fournissent alors une tension et une fréquence hautes, comparables à celles des générateurs à aimant permanent 60 et 61. La disponibilité de la commande du train d'atterrissage principal serait améliorée puisqu'il pourrait être relevé en ayant recours aux connexions électriques 73 et 74 dans certaines conditions de pannes.

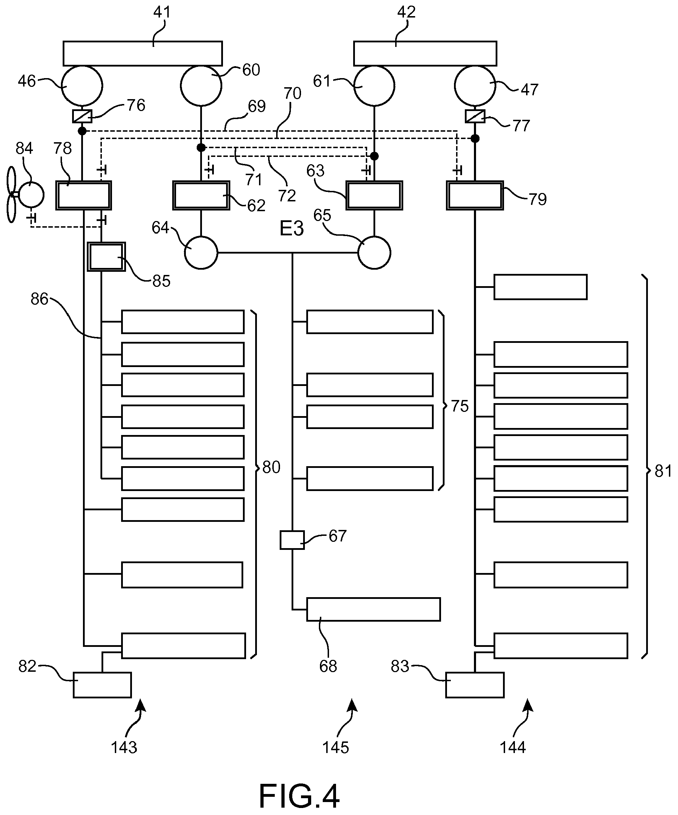

On passe à la description d'une deuxième réalisation de l'invention au moyen de la figure 4. Certains de ses éléments sont identiques à ceux de la première réalisation. On retrouve aussi en aval des moteurs 41 et 42 deux générateurs à fréquence variable 46 et 47 alimentant un premier circuit 143 et un deuxième circuit 144 respectivement, et deux générateurs à aimant permanent 60 et 61 alimentant en commun un troisième circuit 145. Ce troisième circuit 145 est absolument identique au troisième circuit 45 de la réalisation précédente, comprenant notamment des éléments 62 et 63 électriques puis des pompes électro-hydrauliques 64 et 65 en aval des générateurs à aimant permanent 60 et 61, et une jonction des conduits hydrauliques ; seuls les actionneurs et organes 75 commandés par ce troisième circuit 145 sont différents, moins nombreux que dans la réalisation précédente ; il peut s'agir des ailerons gauche et droit, de la gouverne de direction, des élévateurs gauche et droit, des becs et volets et du train d'atterrissage principal 68.

Ce sont le premier circuit 143 et le deuxième circuit 144 qui diffèrent de ceux du premier mode de réalisation. Ils sont ici entièrement électriques tout en restant identiques l'un à l'autre. Chacun d'eux comprend, en aval du générateur à fréquence variable 46 ou 47, un dispositif de redressement 76 ou 77 de courant, un élément 78 ou 79 électrique et des actionneurs et organes commandés 80 et 81 dont ceux du premier circuit 143 peuvent comprendre les ailerons gauche et droit, les spoilers 1, 2 et 4 gauche et droit, la gouverne de direction, l'élévateur gauche, le THSA, les becs, l'inverseur de poussée du premier moteur, un premier actionneur du train d'atterrissage avant et le premier système de freins ; et ceux du deuxième circuit 144 peuvent comprendre les portes, les spoilers 3 et 5 gauche et droit, la gouverne de direction, l'élévateur droit, le THSA, les volets, l'inverseur de poussée du deuxième moteur, et le deuxième système de freins. Les connexions électriques 69, 70, 71 et 72, identiques à celles du premier mode de réalisation, permettent de faire les mêmes reconfigurations électriques. Les organes du premier circuit 143 et du deuxième circuit 144 peuvent aussi être alimentés par des accumulateurs 82 et 83 ; et une éolienne 84 est ajoutée au premier circuit 143, auquel elle est raccordée en aval de l'élément 78, pour assurer une alimentation de secours d'une partie des organes commandés 80, comme les ailerons, les spoilers, la gouverne de direction, l'élévateur, le THSA et les becs, par un élément 85 et une branche bifurquée 86.

Ce deuxième mode de réalisation de l'invention, comprenant des actionneurs mixtes, les uns électriques et les autres hydrauliques, peut être préféré si les actionneurs électriques sont supposés fiables dans l'ensemble mais qu'on préfère garder des actionneurs hydrauliques pour certaines fonctions comme la commande du train principal. Chacun des circuits électriques (le premier circuit 143 et le deuxième circuit 144) peut cependant assurer à lui seul le contrôle du pilotage de l'avion sur tous ses axes, le freinage et les fonctions du train d'atterrissage avant. La plupart des avantages de la première réalisation se retrouvent ici, ainsi que certains autres. La réduction supplémentaire de la longueur hydraulique des circuits, deux d'entre eux étant purement électriques maintenant, réduit le poids, l'encombrement et les nécessités d'entretien du système, et permet une souplesse d'aménagement encore plus grande. Et dans le cas de circuits purement électriques, finissant sur des actionneurs électriques, il est avantageux de fonctionner à courant continu, afin de simplifier l'électronique de puissance de chacun des actionneurs, notamment en supprimant un étage de redressement, et en réduisant les bras de freinage électrique, transistors et résistances. Les dispositifs de redressement 76 et 77 et les accumulateurs 82 et 83 permettent ces simplifications de l'électronique de puissance de chacun des actionneurs 80. Un allégement des actionneurs est alors obtenu, et d'autant plus important qu'ils sont moins chauffés par le freinage électrique et donc moins dissipatifs et dotés de dispositifs de refroidissement moins importants. Ils sont aussi rendus plus fiables. Il faut ajouter que les actionneurs électriques sont plus faciles à poser, à déposer et à vérifier que les actionneurs hydrauliques, de sorte que les opérations d'entretien sont bien plus rapides.

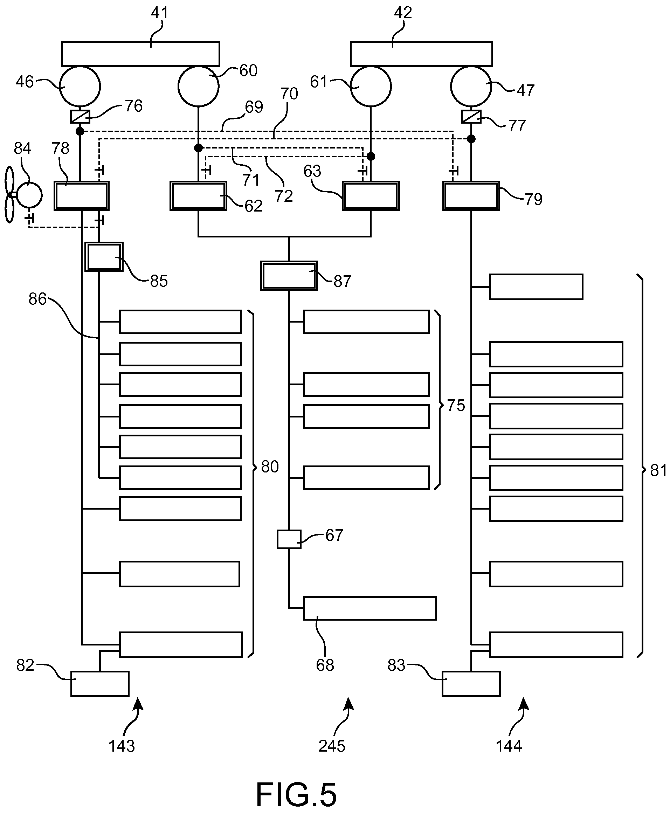

L'utilisation de circuits purement électriques permet donc de préférer le deuxième mode de réalisation au premier. La présence conjointe d'actionneurs hydro-mécaniques et électro-mécaniques possède tout de même des avantages propres si les commandes hydrauliques permettent d'assurer les fonctions principales de l'avion, notamment le contrôle de pilotage sur tous les axes, puisqu'on peut alors privilégier le service des actionneurs hydrauliques 75 du troisième circuit 145 et laisser les deux autres circuits au repos, ce qui permet de réduire le service des électroniques de puissance des actionneurs électriques, leur usure et leur échauffement. Un troisième mode de réalisation sera maintenant décrit à l'aide de la figure 5. Tout le système hydraulique est ici supprimé : le troisième circuit 145 du deuxième mode de réalisation est remplacé par un système purement électrique. On retrouve l'alimentation par des générateurs à aimant permanent 60 et 61 et les éléments 62 et 63 électriques, ainsi que des organes commandés 75 et 68 identiques à ceux du deuxième mode de réalisation, mais le troisième circuit 245 diffère du précédent en ce que les pompes électro-hydrauliques 64 et 65 sont remplacées par un élément 87 électrique de jonction, placé à la bifurcation des circuits et fournissant une tension et une fréquence variables, et en ce que les actionneurs des organes commandés 75 et 68 sont désormais électriques. Le premier circuit 143 et le deuxième circuit 144 sont identiques absolument à ceux de la réalisation précédente. Les connexions électriques 69, 70, 71 et 72 permettant des reconfigurations se retrouvent ici aussi.

Ce troisième mode de réalisation peut être préféré si on juge que les actionneurs électriques sont suffisamment fiables pour commander tous les organes. Les avantages de la réalisation précédente, découlant de la réduction du nombre et de l'importance des composants hydrauliques, sont renforcés. Il est à noter que l'élément 87 électrique fournissant une fréquence et une tension variables pourrait être remplacé par des éléments semblables à ceux des autres circuits, qui assureraient la délivrance d'une tension continue et constante. L'électronique de puissance pourrait alors être similaire pour tous les actionneurs de l'avion.

L'invention pourrait être mise en oeuvre d'autres façons. C'est ainsi que les générateurs à aimant permanent, malgré leurs avantages, pourraient être remplacés par des générateurs à fréquence variable. Rendu plus uniforme, le système serait alors simplifié, mais aurait l'inconvénient d'une exposition aux pannes génériques. C'est pourquoi des générateurs à fréquence variable de modèles différents les uns des autres seraient alors préférés.

L'alimentation des pompes électro-hydrauliques par une tension alternative à fréquence variable et valeur efficace constante ou par une tension continue nécessite l'utilisation d'une électronique de puissance pour piloter les phases du moteur électrique et conserver un couple suffisant, comme cela a été indiqué dans la description de la figure 3. La fiabilité de ce module d'électronique de puissance pouvant se révéler pénalisante sur la disponibilité opérationnelle de l'avion, par exemple au niveau des génératrices électro-hydrauliques des circuits 54 et 55, il peut être alors avantageux de le dupliquer tout en conservant l'utilisation d'un seul filtre dont la fiabilité est révélée acceptable. La panne d'un de ces modules dupliqués n'entraînerait plus de risque d'annulation de décollage.

## Revendications

1. Système de commandes de vol d'un avion comprenant des moyens de prise d'énergie reliés à des moteurs (41, 42) de l'avion, des organes commandés et des actionneurs (54, 55, 57, 66, 68, 75, 80, 81) desdits organes commandés, et des circuits (43, 44, 45, 143, 144, 145, 245) reliant les moyens de prise d'énergie aux actionneurs, dans lequel tous les moyens de prise d'énergie (46, 47, 60, 61) sont des générateurs d'électricité, et tous les circuits comprennent une portion de transport d'électricité adjacente aux moyens de prise d'énergie, les moyens de prise d'énergie sont de deux catégories différentes, **caractérisé en ce que** les moyens de prise d' énergie comprennent au moins un générateur électrique fournissant une tension à fréquence variable et niveau variable évoluant avec un rapport niveau de tension sur fréquence constant (60, 61), les circuits reliés à cet au moins un générateur comprennent des pompes électro-hydrauliques (64, 65), et ledit générateur électrique fournissant une tension à fréquence variable et niveau variable évoluant avec un rapport niveau de tension sur fréquence constant (60, 61) est un générateur à aimant permanent auquel les pompes électro-hydrauliques sont reliées sans intégrer d'électronique de puissance, et **en ce que** les pompes électro-hydrauliques sont de type à aimant permanent.

2. Système de commandes de vol d'un avion selon la revendication 1, **caractérisé en ce que** les moyens de prise d'énergie comprennent encore soit des générateurs électriques à fréquence variable et niveau de tension fixe, soit des générateurs électriques à fréquence fixe et niveau de tension fixe.

3. Système de commandes de vol d'un avion selon l'une quelconque des revendications 1 ou 2, **caractérisé en ce qu'**au moins un circuit est entièrement électrique (143, 144) jusqu'aux actionneurs et un au moins des circuits est électrique et hydraulique (145), pourvu au moins d'une pompe électro-hydraulique, et le circuit électrique et hydraulique dessert un train d'atterrissage principal (68) de l'avion.

4. Système de commandes de vol d'un avion selon l'une quelconque des revendications 1 ou 2, **caractérisé en ce qu'**au moins un des circuits (45, 145, 245) comprend une bifurcation vers au moins deux des moyens de prise d'énergie, reliés à deux des moteurs, lesdits moteurs étant différents, et ledit circuit (45, 145) comprend deux pompes électro-hydrauliques et dessert un train d'atterrissage principal de l'avion.

5. Système de commandes de vol d'un avion selon la revendication 4, **caractérisé en ce que** le circuit électrique et hydraulique desservant le train d'atterrissage principal dessert aussi des organes permettant un contrôle du pilotage de l'avion sur tous ses axes, et les circuits entièrement électriques desservent aussi des organes permettant le contrôle du pilotage de l'avion sur tous ses axes.

6. Système de commandes de vol d'un avion selon l'une quelconque des revendications 1 ou 2, **caractérisé en ce qu'**il comprend des connexions électriques entre les circuits (69, 70, 71, 72, 73, 74), permettant de commuter de la puissance électrique d'un à un autre desdits circuits.

7. Système de commandes de vol d'un avion selon la revendication 6, **caractérisé en ce que** les connexions électriques (73, 74) s'étendent entre des générateurs à fréquence variable de certains des circuits et des pompes électro-hydrauliques d'autres des circuits, et sont utilisées en phase de décollage pour assurer le relevage d'un train d'atterrissage principal dans certaines conditions de pannes.

8. Avion pourvu d'un système de commande de vol selon l'une quelconque des revendications précédentes.

## Patentansprüche

1. Flugsteuerungssystem eines Flugzeugs, das mit Motoren (41, 42) des Flugzeugs verbundene Energieanschlusseinrichtungen, gesteuerte Organe und Stellantriebe (54, 55, 57, 66, 68, 75, 80, 81) der gesteuerten Organe und Schaltkreise (43, 44, 45, 143, 144, 145, 245) enthält, die die Energieanschlusseinrichtungen mit den Stellantrieben verbinden, wobei alle Energieanschlusseinrichtungen (46, 47, 60, 61) Elektrizitätsgeneratoren sind, und alle Schaltkreise einen den Energieanschlusseinrichtungen benachbarten Elektrizitätstransportteil enthalten, die Energieanschlusseinrichtungen von zwei unterschiedlichen Kategorien sind, **dadurch gekennzeichnet, dass** die Energieanschlusseinrichtungen mindestens einen elektrischen Generator enthalten, der eine Spannung mit variabler Frequenz und variablem Pegel liefert, die sich mit einem konstanten Verhältnis von Spannungspegel zu Frequenz (60, 61) entwickelt, wobei die mit diesem mindestens einen Generator verbundenen Schaltkreise elektro-hydraulische Pumpen (64, 65) enthalten, und der elektrische Generator, der eine Spannung mit variabler Frequenz und variablem Pegel liefert, die sich mit einem konstanten Verhältnis von Spannungspegel zu Frequenz (60, 61) entwickelt, ein Generator mit Dauermagnet ist, mit dem die elektro-hydraulischen Pumpen verbunden sind, ohne eine Leistungselektronik zu umfassen, und dass die elektro-hydraulischen Pumpen von der Art mit Dauermagnet sind.

2. Flugsteuerungssystem eines Flugzeugs nach Anspruch 1, **dadurch gekennzeichnet, dass** die Energieanschlusseinrichtungen weiter entweder elektrische Generatoren mit variabler Frequenz und festem Spannungspegel oder elektrische Generatoren mit fester Frequenz und festem Spannungspegel enthalten.

3. Flugsteuerungssystem eines Flugzeugs nach einem der Ansprüche 1 oder 2, **dadurch gekennzeichnet, dass** mindestens ein Schaltkreis vollständig elektrisch (143, 144) ist, bis zu den Stellantrieben, und mindestens einer der Schaltkreise elektrisch und hydraulisch (145) ist, versehen mit mindestens einer elektro-hydraulischen Pumpe, und der elektrische und hydraulische Schaltkreis ein Hauptfahrgestell (68) des Flugzeugs versorgt.

4. Flugsteuerungssystem eines Flugzeugs nach einem der Ansprüche 1 oder 2, **dadurch gekennzeichnet, dass** mindestens einer der Schaltkreise (45, 145, 245) eine Abzweigung zu mindestens zwei der Energieanschlusseinrichtungen enthält, die mit zwei der Motoren verbunden sind, wobei die Motoren unterschiedlich sind, und der Schaltkreis (45, 145) zwei elektro-hydraulische Pumpen enthält und ein Hauptfahrgestell des Flugzeugs versorgt.

5. Flugsteuerungssystem eines Flugzeugs nach Anspruch 4, **dadurch gekennzeichnet, dass** der das Hauptfahrgestell versorgende elektrische und hydraulische Schaltkreis auch Organe versorgt, die eine Kontrolle der Steuerung des Flugzeugs über alle seine Achsen erlauben, und die ganz elektrischen Schaltkreise auch Organe versorgen, die die Kontrolle der Steuerung des Flugzeugs über alle seine Achsen erlauben.

6. Flugsteuerungssystem eines Flugzeugs nach einem der Ansprüche 1 oder 2, **dadurch gekennzeichnet, dass** es elektrische Verbindungen zwischen den Schaltkreisen (69, 70, 71, 72, 73, 74) enthält, die es ermöglichen, elektrische Leistung von einem zum anderen der Schaltkreise umzuschalten.

7. Flugsteuerungssystem eines Flugzeugs nach Anspruch 6, **dadurch gekennzeichnet, dass** die elektrischen Verbindungen (73, 74) sich zwischen Generatoren mit variabler Frequenz bestimmter der Schaltkreise und elektro-hydraulischen Pumpen anderer der Schaltkreise erstrecken und in der Abflugphase verwendet werden, um das Abheben eines Hauptfahrgestells unter bestimmten Pannenbedingungen zu gewährleisten.

8. Flugzeug, das mit einem Flugsteuerungssystem eines Flugzeugs nach einem der vorhergehenden Ansprüche versehen ist.

## Claims

1. Aircraft flight control system comprising power takeoff means connected to aircraft engines (41, 42), controlled devices and actuators (54, 55, 57, 66, 68, 75, 80, 81) for said controlled devices, and circuits (43, 44, 45, 143, 144, 145, 245) connecting the power takeoff means to the actuators, in which all the power takeoff means (46, 47, 60, 61) are electricity generators, and all the circuits comprise an electricity transmission portion adjacent to the power takeoff means, the power takeoff means belong to two different categories, **characterised in that** the power takeoff means comprise at least one electrical generator outputting a variable frequency and variable amplitude voltage changing with a constant voltage to frequency ratio (60, 61), the circuits connected to this at least one generator comprise electro-hydraulic pumps (64, 65), and said electrical generator outputting a variable frequency and variable amplitude voltage changing with a constant voltage to frequency ratio (60, 61) is a permanent magnet generator to which the electro-hydraulic pumps are connected without any power electronics, and **in that** the electro-hydraulic pumps are of the permanent magnet type.

2. Aircraft flight control system according to claim 1, **characterised in that** the power takeoff means also comprise either variable frequency and fixed voltage electrical generators, or fixed frequency and fixed voltage electrical generators.

3. Aircraft flight control system according to any one of claims 1 or 2, **characterised in that** at least one circuit is all-electric (143, 144) as far as the actuators and at least one of the circuits is electric and hydraulic (145), provided with at least one electro-hydraulic pump, and the electric and hydraulic circuit supplies a main landing gear (68) of the aircraft.

4. Aircraft flight control system according to any one of claims 1 or 2, **characterised in that** at least one of the circuits (45, 145, 245) comprises a fork to at least two of the power takeoff means, connected to two of the engines, said engines being different from each other, and said circuit (45, 145) comprises electro-hydraulic pumps and supplies a main landing gear of the aircraft.

5. Aircraft flight control system according to claim 4, **characterised in that** the electric and hydraulic circuit supplying the main landing gear also supplies devices for controlling piloting of the aircraft on all its axes, and the all-electric circuits also supply devices enabling control over piloting of the aircraft on all its axes.

6. Aircraft flight control system according to any one of claims 1 or 2, **characterised in that** it comprises electrical connections between circuits (69, 70, 71, 72, 73, 74), enabling switching of electrical power from one of said circuits to another.

7. Aircraft flight control system according to claim 6, **characterised in that** electrical connections (73, 74) extend between frequency variable generators in some of the circuits and electro-hydraulic pumps in other circuits, and are used during the takeoff phase to retract a main landing gear under some failure conditions.

8. Aicraft provided with a flight control system according to any one of the previous claims.
